# EUROPÄISCHE PATENTANMELDUNG

(11) **EP 1 103 213 A2**
(43) Veröffentlichungstag der Anmeldung: **30.05.2001**
(21) Anmeldenummer: 00122523.4
(22) Anmeldetag: 16.10.2000
(51) Int. Cl.: A47K 4/00

(54) **Duscheinrichtung**

(30) Priorität: 25.11.1999 DE 19956668
(71) Anmelder: EADS Airbus GmbH, 21129 Hamburg (DE)
(72) Erfinder: Lau, Michael, 21739 Dollern (DE); Schaich, Sven, 21629 Neu Wulmstorf (DE)
(74) Vertreter: Hansmann, Dierk, Dipl.-Ing.

(57) **Zusammenfassung**

Bei einer Duscheinrichtung (1), insbesondere für Passagierkabinen in Verkehrsmitteln, im wesentlichen bestehend aus einer Duschkabine (2) mit einer Duschvorrichtung (3) und einem Zugangsbereich zur Duschkabine (2), besteht das Erfordernis, den Installationsaufwand sowie den Raumbedarf zu minimieren und eine hohe Nutzungsfrequenz der Duscheinrichtung zu gewährleisten. Erfindungsgemäß wird vorgeschlagen, daß der Zugang zur Duschkabine (2) über mindestens zwei Zugangsbereiche (4, 5) vorgesehen ist, wobei der Zutritt zur Duschkabine (2) zu einem Zeitpunkt jeweils nur für ein Zugangsbereich (4, 5) gewährleistbar ist und zur gleichen Zeit weitere Zugangsbereiche (4, 5) gesperrt sind.

Somit werden auch bei einer minimal zur Verfügung stehenden Grundfläche Duscheinrichtungen geschaffen, die eine hohe Nutzungsfequenz ermöglichen. Mehrere Nutzer können sich ungestört parallel auf den Duschvorgang vorbereiten bzw. nachbereiten. In einer bestimmten Zeit können somit mehr Nutzer als bei einer herkömmlichen Duscheinrichtung die Dusche (2) benutzen. Es wird somit vermieden, das weitere Duscheinrichtungen installiert werden müssen bzw. lange Wartezeiten bei der Duschbenutzung auftreten.

## Beschreibung

Die Erfindung betrifft eine Duscheinrichtung, insbesondere für Passagierkabinen in Verkehrsmitteln, im wesentlichen bestehend aus einer Duschkabine mit einer Duschvorrichtung und einem Zugangsbereich zur Duschkabine.

In herkömmlichen Duscheinrichtungen, insbesondere für die Nutzung in öffentlichen Einrichtungen oder Transportmitteln, die hohen Anforderungen an die Privatsphäre der Menschen genügen müssen, wird üblicherweise jeder Duschkabine ein Zugangsbereich zugeordnet, der vom jeweiligen Nutzer der Dusche allein betreten werden kann und eine verschließbare An- bzw. Umkleidekabine aufweist. Der Prozeß des Duschens gliedert sich bei einer solchen Duscheinrichtung in folgende Schritte:
1. Betreten der An- bzw. Umkleidekabine
2. Auskleiden
3. Vorbereitung
4. Duschen in der Duschkabine
5. Abtrocknen
6. Ankleiden
7. Kosmetik
8. Verlassen der An- bzw. Umkleidekabine

Während dieser Schritte ist die Duscheinrichtung nur von einem Nutzer belegt, weitere Nutzer müssen Wartezeiten auf sich nehmen und die Nutzungsfrequenz ist demzufolge gering. Folge kann somit sein, daß mehrere Duscheinrichtungen installiert werden müssen, um für eine entsprechende Anzahl von Personen Duschmöglichkeiten zu schaffen, was wiederum mit einem erhöhten Installationsaufwand sowie - bei Transport- bzw. Verkehrsmitteln von besonderer Bedeutung - mit einem hohen Gewicht und hohem Raumbedarf verbunden ist.

Insbesondere für Großraumflugzeuge, die für Langstreckenflüge vorgesehen sind, ist es ein Erfordernis, für Passagiere einen bestmöglichen Komfort und Service anzubieten, wobei auch Duschmöglichkeiten vorzusehen sind. In einer Passagierkabine eines Flugzeuges ist dabei problematisch, daß der dafür zur Verfügung stehende Raum begrenzt ist und unter diesen Bedingungen eine möglichst hohe Nutzungsfrequenz der Duscheinrichtung möglich sein soll.

Der Erfindung liegt daher die Aufgabe zugrunde, eine gattungsgemäße Duscheinrichtung so auszubilden, das sie für öffentliche Einrichtungen bzw. für Passagierkabinen in Transportmitteln geeignet ist, wobei der Installationsaufwand sowie der Raumbedarf zu minimieren und eine hohe Nutzungsfrequenz der Duscheinrichtung zu gewährleisten ist.

Diese Aufgabe wird bei einer gattungsgemäßen Duscheinrichtung mit den im Patentanspruch 1 genannten Maßnahmen gelöst.

Dabei ist insbesondere von Vorteil, daß auch bei einer minimal zur Verfügung stehenden Grundfläche Duscheinrichtungen geschaffen werden, die eine hohe Nutzungsfequenz ermöglichen. Mehrere Nutzer können sich ungestört parallel auf den Duschvorgang (Schritt 4) vorbereiten bzw. die nach dem eigentlichen Duschen vorzunehmenden Schritte 5. bis 8. durchführen. In einer bestimmten Zeit können somit mehr Nutzer als bei einer herkömmlichen Duscheinrichtung die Dusche benutzen. Es wird somit vermieden, das weitere Duscheinrichtungen installiert werden müssen bzw. lange Wartezeiten bei der Duschbenutzung auftreten.

Weiterbildungen und vorteilhafte Ausgestaltungen sind in den Unteransprüchen 2 bis 10 angegeben.

In der Zeichnung sind Ausführungsbeispiele der Erfindung dargestellt, die nachstehend anhand der Figuren 1 bis 5 näher beschrieben sind. In den Figuren sind gleiche Bauteile mit gleichen Bezugszeichen versehen.

Die Zeichnung zeigt im einzelnen:
- Fig. 1: eine erfindungsgemäße Duscheinrichtung in einer ersten Ausführungsform in einer Perspektivdarstellung,
- Fig. 2: die Duscheinrichtung gemäß Fig. 1 in einer Ansicht von oben,
- Fig. 3: eine Draufsicht auf eine erfindungsgemäße Duscheinrichtung in einer zweiten Ausführungsform,
- Fig. 4 und 5: eine dritte und vierte Ausführungsform einer erfindungsgemäßen Duscheinrichtung.

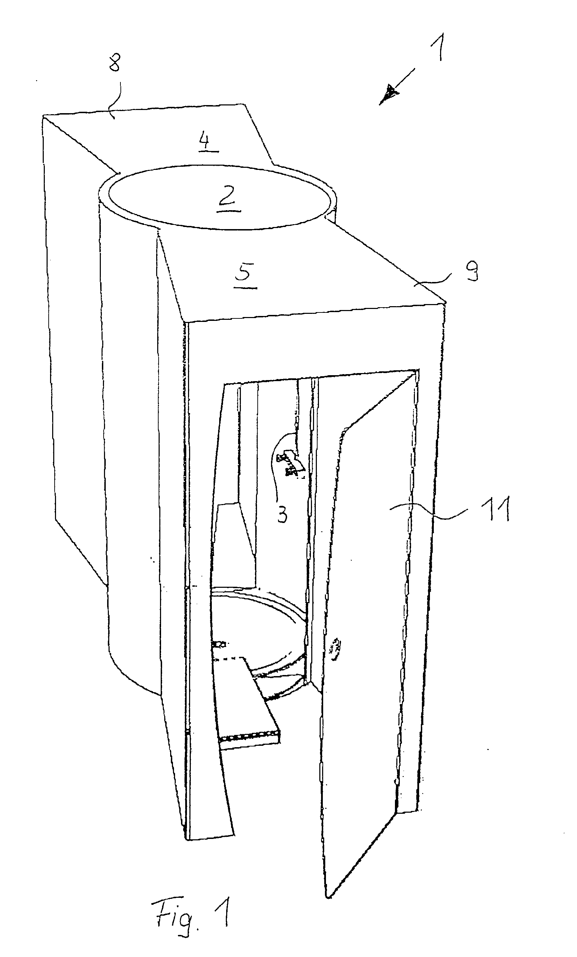

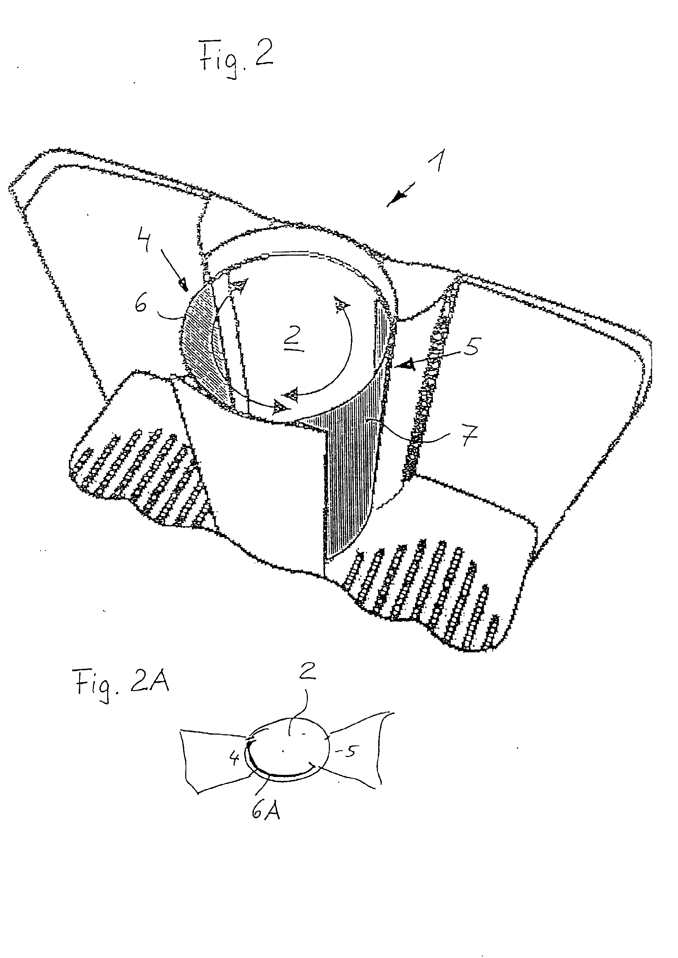

In Fig. 1 ist eine erfindungsgemäße Duscheinrichtung 1 ersichtlich, die im wesentlichen aus einer zentral angeordneten Duschkabine 2 und Zugangsbereichen 4 und 5 besteht. In der Duschkabine 2 ist eine Duschvorrichtung 3 (nur teilweise ersichtlich) vorgesehen, die an einen Wasseranschluß (nicht gezeigt) angeschlossen ist und übliche Duscharmaturen aufweist. Weiterhin kann ein Selbstreinigungssystem innerhalb der Duschkabine vorgesehen sein, um nach jedem Nutzer eine Reinigung der Duschkabine 2 vornehmen zu können. Die Betätigung das Selbstreinigungssystems kann bedarfsweise manuell erfolgen oder automatisch nach jedem Duschvorgang erfolgen. Die Duschkabine 2 weist eine kreisförmige Grundfläche auf und an den sich gegenüberliegenden Seiten der Duschkabine 2 sind die Zugangsbereiche 4 und 5 angeordnet. Zum Verschließen der Zugangsbereiche 4 und 5 sind Türen 6 und 7 (in Fig. 2 ersichtlich) vorgesehen, wobei jeweils nur für einen Zugangsbereich 4 oder 5 der Zugang zur Duschkabine 2 gewährleistet wird und zur gleichen Zeit der jeweils andere Zugangsbereich 4 oder 5 gesperrt ist. Dies kann manuell oder mittels einer Steuerungseinheit realisiert werden. An dem jeweiligen Zugangsbereich 4 und 5 ist eine Umkleidekabine 8 bzw. 9 vorgesehen, der ebenfalls mittels Türen 10 bzw. 11 verschließbar ist und somit während des Umkleidens die Privatsphäre des Nutzers der Dusche gewährleistet bleibt.

In Fig. 2 ist die Duscheinrichtung 1 in einer Ansicht von oben gezeigt. Die Duschkabine 2 ist vom entsprechenden Zutrittsbereich 4 bzw. 5 mittels Türen 6 bzw. 7 getrennt, wobei die Türen 6 und 7 - angepaßt an die kreisförmige Grundform der Duschkabine 2 - ebenfalls gekrümmt sind. Die Türen 6 und 7 sind bevorzugt als Schiebetüren ausgebildet, die entlang der Wandung der Duschkabine 2 verschiebbar sind. Eine weitere bevorzugte Ausführung ist mittels einer einzigen Zugangstür 6A (in der Fig. 2A dargestellt) realisiert, mit der mehrere Zugangsbereiche - hier die Zugangsbereiche 4 und 5 - verschlossen werden können. Die Zugangstür 6A ist um die Mittelachse der Duschkabine 2 drehbar und im gezeigten Zustand ist der Zugangsbereich 4 geschlossen und gleichzeitig der Zugangsbereich 5 offen. Mit einer solchen Ausbildung der Zugangstür 6A ist sichergestellt, daß wirklich immer nur ein Zugang zur Duschkabine 2 realisiert ist.

Mit einer Duscheinrichtung 1 kann der Prozeß des Duschens für einen Nutzer folgendermaßen ablaufen:
1. Betreten der An- bzw. Umkleidekabinen 8 bzw. 9
2. Auskleiden
3. Vorbereitung und Eintreten in die Duschkabine 2
4. Duschen in der Duschkabine 2
5. Abtrocknen und Austreten aus der Duschkabine 2
6. Ankleiden
7. Kosmetik
8. Verlassen der An- bzw. Umkleidekabine 8 bzw. 9

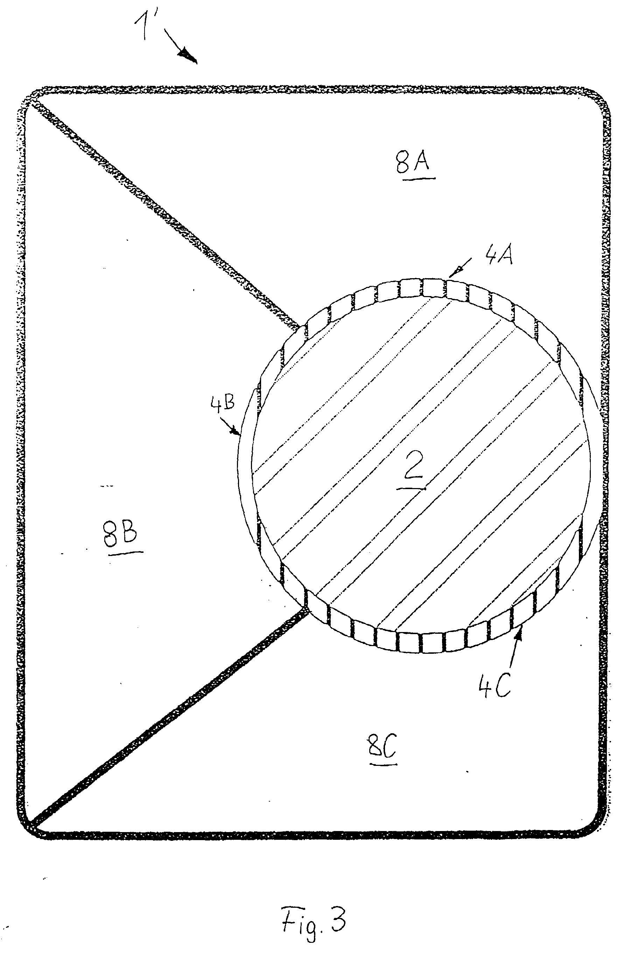

Hierbei ist es möglich, daß bereits während des Duschens eines ersten Nutzers in der Duschkabine 2 ein weiterer Nutzer in eine der beiden Umkleidekabinen 8 bzw. 9 eintreten und sich auf das eigentliche Duschen vorbereiten kann. Unmittelbar nach dem Verlassen der Duschkabine 2 durch den ersten Nutzer kann der zweite Nutzer aus seiner Umkleidekabine 8 bzw. 9 in die Duschkabine 2 eintreten und duschen, während sich der erste Nutzer in der entsprechenden anderen Umkleidekabine 8 bzw. 9 wieder anzieht. Durch die Anordnung vom mehr als einen Zugangsbereich zur Duschkabine 2 ist es gewährleistet, daß die Nutzer jeweils allein die Duschkabine 2 nutzen und beim Ein- und Austreten aus der Duschkabine 2 in ihre Umkleidekabine 8 bzw. 9 nicht durch weitere Nutzer gestört werden können. Da die Nutzung der Duschkabine 2 durch das eigentliche Duschen (Schritt 4) im Verhältnis zur Nutzung der Umkleidekabine (alle anderen Schritte) üblicherweise weniger Zeit in Anspruch nimmt, trägt eine Anordnung von mehreren Zugangsbereichen und Umkleidekabinen an eine Duschkabine wesentlich zur Erhöhung der Nutzungsfrequenz der Duscheinrichtung bei. So sind neben der gezeigten Ausführungsform mit zwei Zugangsbereichen und zwei Umkleidekabinen eine Anordnung von einer größeren Anzahl Zugangsbereiche und Umkleidekabinen denkbar, wobei dies abhängig von der Größe der Duschkabine 2 und natürlich von bestimmten Abmessungen und Größenverhältnissen der Zugangsbereiche ist. Beispielhaft dafür ist in Fig. 3 eine zweite Ausführungsform einer Duscheinrichtung gezeigt, die nachfolgend beschrieben wird.

In Fig. 3 ist eine schematische Ansicht einer Duscheinrichtung 1' gezeigt, die drei Zugangsbereiche 4A, 4B, 4C zur Duschkabine 2 aufweist und den drei Zugangsbereichen 4A, 4B, 4C drei Umkleidekabinen 8A, 8B, 8C zugeordnet sind. Die Zugangsbereiche 4A, 4B, 4C sowie die Umkleidekabinen 8A, 8B, 8C sind um die Duschkabine 2 herum verteilt, wobei die Umkleidekabinen 8A, 8B und 8C in der gezeigten Ausführung nicht einheitlich groß ausgeführt sind, sondern die Kabine 8B eine größere Grundfläche aufweist. Damit können auch entsprechend dem Bedarf, beispielsweise für Mütter mit Kindern, bequemere Umkleidekabinen zur Verfügung gestellt werden.
Mit dieser Ausführungsform der Duscheinrichtung 1' ist gegenüber der ersten Ausführungsform eine weitere Erhöhung der Nutzungsfequenz der Duscheinrichtung möglich. Im übrigen wird auf die Beschreibung zur ersten Ausführungsfom verwiesen, da die weiteren, hier nicht gezeigten Bauteile sowie die möglichen Duschvorgänge entsprechend der ersten Ausführungform ausgeführt sein können.

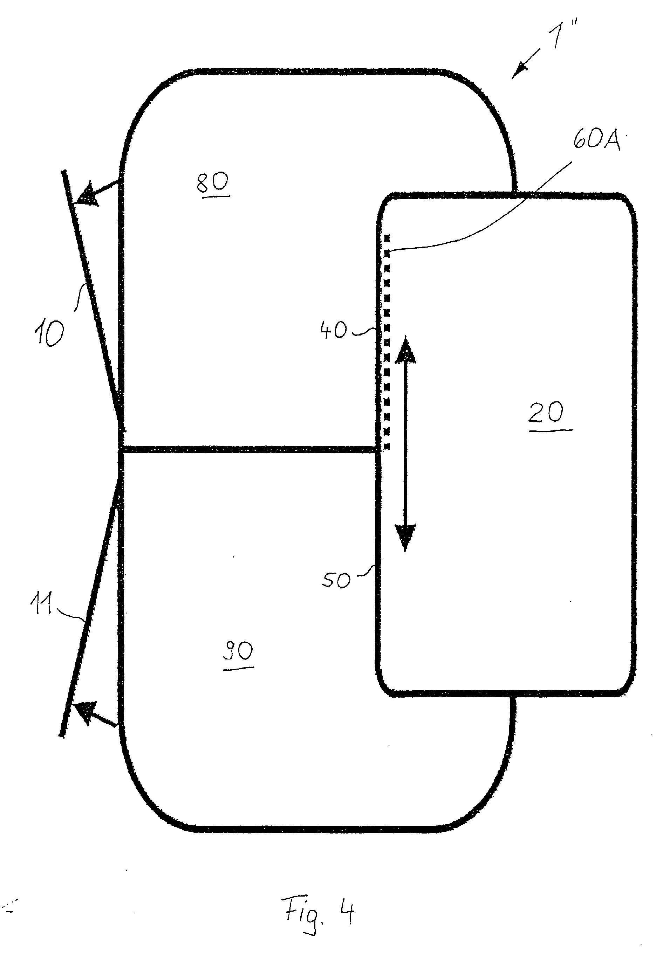

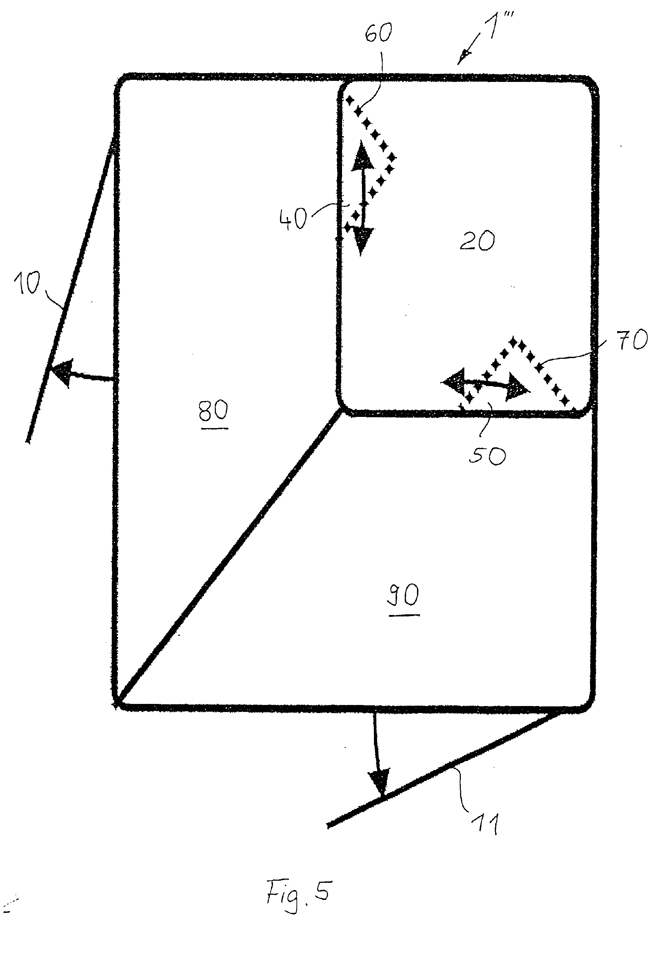

In den Fign. 4 und 5 sind zwei weitere Ausführungen einer Duscheinrichtung 1" bzw. 1''' in einer Ansicht von oben gezeigt. In schematischer Darstellung ist hier jeweils eine rechteckförmige Duschkabine 20 ersichtlich, die zwei Zugangsbereiche 40 und 50 aufweist und an die Zugangsbereiche 40 und 50 zugeordnete Umkleidekabinen 80 und 90 vorgesehen sind. Die Umkleidekabinen 80 bzw. 90 sind mittels Türen 10 und 11 verschließbar. Die Duschkabine 20 ist in der gezeigten rechteckförmigen Ausführung eine bevorzugte Ausbildung eines Vielecks. Es sind weiterhin mehreckige Grundflächenformen möglich, wobei jeweils eine optimale Anpassung an vorbestimmte räumliche Bedingungen erfolgen kann.
Die Zugangsbereiche 40 und 50 sind in der in Fig. 4 gezeigten Ausführungsform mittels einer einzigen Schiebetür 60A verschließbar, wobei jeweils ein Zugangsbereich (gezeigt ist hier Zugangsbereich 40) verschlossen ist, währenddessen gleichzeitig der weitere Zugangsbereich (hier 50) automatisch offen ist. Mit einer solchen Ausbildung der Zugangstür 6A ist sichergestellt, daß wirklich immer nur ein Zugang zur Duschkabine 2 möglich ist.
In der in Fig. 5 gezeigten Ausführungsform ist die Duscheinrichtung 1"' gezeigt, die die Zugangsbereiche 40 und 50 zur Duschkabine 20 mittels separater Türen 60 und 70 verschließen kann. Eine solche Anordnung der Türen 60 und 70 ist vorteilhaft, wenn ein Zugang zur Duschkabine 20 nicht von einer Seite, sondern von unterschiedlichen Seiten erfolgen soll. Bedarfsweise ist hier auch eine Steuerungsvorrichtung vorzusehen, die das Öffnen der richtigen Tür bei gleichzeitigem Versperren der anderen Tür ermöglicht. Weiterhin sind in einer bevorzugten Ausgestaltung Anzeigeelemente zumindest an jedem Zugangsbereich vorgesehen, um die Nutzer über Belegungen und mögliche Wartezeiten zu informieren.

### Bezugszeichen

- 1, 1', 1'', 1''' -: Duscheinrichtung
- 2, 20: Duschkabine
- 3 -: Duschvorrichtung
- 4, 40: Zugangsbereich
- 5, 50 -: Zugangsbereich zur Duschkabine
- 6, .60 -: Türen am Zugangsbereich
- 6A, 60A -: Türen am Zugangsbereich
- 7, 70 -: Türen am Zugangsbereich
- 8, 80 -: Umkleidekabine
- 9, 90 -: Umkleidekabine
- 10 -: Türen an Umkleidekabine
- 11 -: Türen an Umkleidekabine

## Patentansprüche

1. Duscheinrichtung (1; 1'; 1"; 1"'), insbesondere für Passagierkabinen in Verkehrsmitteln, im wesentlichen bestehend aus einer Duschkabine (2; 20) mit einer Duschvorrichtung (3) und einem Zugangsbereich zur Duschkabine (2; 20),
**dadurch gekennzeichnet**, daß der Zugang zur Duschkabine (2; 20) über mindestens zwei Zugangsbereiche (4, 5; 40, 50; 4A, 4B, 4C) vorgesehen ist, wobei der Zutritt zur Duschkabine (2; 20) zu einem Zeitpunkt jeweils nur für ein Zugangsbereich (4, 5; 40, 50; 4A, 4B, 4C) gewährleistbar ist und zur gleichen Zeit weitere Zugangsbereiche (4, 5; 40, 50; 4A, 4B, 4C) gesperrt sind.

2. Duscheinrichtung nach Anspruch 1,
**dadurch gekennzeichnet**, daß an jeweils einen Zugangsbereich (4, 5; 40, 50; 4A, 4B, 4C) eine Umkleidekabine (7, 8; 70, 80; 8A, 8B, 8C) angeordnet ist und der entsprechende Zugangsbereich mittels einer Tür (6, 7; 60, 79; 6A, 60A) verschließbar ist.

3. Duscheinrichtung nach einem der Ansprüche 1 oder 2,
**dadurch gekennzeichnet**, daß die Grundfläche der Duschkabine (2) im wesentlichen kreisförmig ausgebildet ist, wobei die zum Verschließen der Zugangsbereiche (4, 5) vorgesehenen Türen (6, 6, 6A) in der Krümmung der Kreisform angepaßt sind.

4. Duscheinrichtung nach einem der Ansprüche 1 oder 2,
**dadurch gekennzeichnet**, daß die Grundfläche der Duschkabine (20) im wesentlichen mehreckförmig ausgebildet ist, wobei die zum Verschließen der Zugangsbereiche (40, 50) vorgesehenen Türen Zugangsbereiche (60, 70; 60A) der Mehreckform angepaßt sind.

5. Duscheinrichtung nach einem der Ansprüche 1 bis 4,
**dadurch gekennzeichnet**, daß die Anzahl der vorhandenen Türen (6, 7; 60, 70) der Anzahl der Zugangsbereiche (4, 5; 40, 50) zur Duschkabine (2; 20) entspricht und mittels einer Steuereinheit nur jeweils eine Tür den Zugangsbereich freigibt und zum gleichen Zeitpunkt die anderen Türen den entsprechenden Zugangsbereich versperren.

6. Duscheinrichtung nach einem der Ansprüche 1 bis 4,
**dadurch gekennzeichnet**, daß mehrere Zugangsbereiche (4, 5) mittels einer, um die Mittelachse der Duschkabine drehbaren Zugangstür (6A) verschließbar sind, wobei die Zugangstür jeweils einen Zugangsbereich offenläßt und die weiteren Zugangsbereiche verschließt.

7. Duscheinrichtung nach einem der Ansprüche 1 bis 4,
**dadurch gekennzeichnet**, daß mehrere Zugangsbereiche (40, 50) mittels einer längsverschieblichen Zugangstür (60A) verschließbar sind, wobei die Zugangstür jeweils einen Zugangsbereich offenläßt und die weiteren Zugangsbereiche verschließt.

8. Duscheinrichtung nach einem der Ansprüche 6 oder 7,
**dadurch gekennzeichnet**, daß Steuer- und Anzeigeelemente an jedem Zugangsbereich zur Duschkabine vorgesehen sind, die Belegungs-und/oder Wartezeiten anzeigen sowie die Belegung der Duschkabine steuern.

9. Duscheinrichtung nach einem der Ansprüche 6 bis 8,
**dadurch gekennzeichnet**, daß die Duschkabine ein Selbstreinigungssystem enthält.

10. Duscheinrichtung nach einem der Ansprüche 1 bis 9,
**dadurch gekennzeichnet**, daß das Auslösen des Reinigungsvorganges mittels dem Selbstreinigungssystem durch das Schließen des aktuellen Zugangsbereiches erfolgt.
